# EUROPÄISCHE PATENTSCHRIFT

(11) **EP 1 701 237 B1**
(45) Veröffentlichungstag und Bekanntmachung des Hinweises auf die Patenterteilung: **07.11.2012**
(21) Anmeldenummer: 06010894.1
(22) Anmeldetag: 19.12.2001
(51) Int. Cl.: H05B 3/10, H05B 1/02, G05D 23/19

(54) **Heizelement**
Heating element
Elément chauffant

(30) Priorität: 24.01.2001 EP 01101490
(43) Veröffentlichungstag der Anmeldung: 13.09.2006
(62) Teilanmeldung aus: 01130185.0
(73) Patentinhaber: Leister Technologies AG, 6056 Kägiswil (CH)
(72) Erfinder: Wyss, Markus, 6103 Schwarzenberg (CH); Von Wyl, Bruno, 6056 Kägiswil (CH)
(74) Vertreter: Klocke, Peter

(56) Entgegenhaltungen:
- CH-A- 537 687
- DE-A1- 19 839 044
- US-A- 3 270 182
- US-A- 3 716 693

## Beschreibung

Die vorliegende Erfindung betrifft ein Heizelement zur Anordnung im Luftstrom einer Heißlufteinrichtung mit einem Träger aus temperaturbeständigem isolierendem Material, der in Luftkanälen angeordnete Heizdrähte aufweist, sowie mit mindestens einer metallischen Halterung für den Träger zur Fixierung des Trägers in dem Heizelement.

Derartige Heißlufteinrichtungen mit Heizelementen sind als Heißluftgeräte, -module oder -systeme auf dem Markt erhältlich und bekannt. Der in dem Luft- oder Gasstrom angeordnete Träger des Heizelements besteht üblicherweise aus Keramik oder einem anderen geeigneten Material und befindet sich in einem Heizrohr, an dessen einen Ende beispielsweise Luft oder Gas eingeblasen wird. Diese Heißlufteinrichtungen gibt es mit verschiedenen Arten der Luft- oder Gasstromerzeugung. Es gibt Geräte bei denen direkt ein Gebläse in dem Gehäuse angeordnet ist, genauso wie Geräte mit einer externen Luftstromerzeugung. Am anderen Ende des Heizrohres können üblicherweise verschiedene Düsen angeschlossen werden. In dem Heizrohr befindet sich das Heizelement mit dem Träger aus temperaturbeständigem Material, üblicherweise keramischen Material, der beispielsweise über einen zentralen Stift an einer auf der dem Gebläse zugewandten Seite angeordneten Anschlusskopf gehalten ist. Über diesen Anschlusskopf erfolgt auch der elektrische Anschluss der in dem Träger angeordneten Heizdrähte. Auf der der Düse zugewandten Seite befindet sich in der Regel noch zusätzlich eine dünne Keramikscheibe, die ebenfalls im wesentlichen Luftkanäle aufweist, wobei diese Schutzscheibe nicht über die Heizdrähte geheizt wird. Die Schutzscheibe ist beweglich und von dem Träger getrennt, sitzt jedoch ebenfalls auf dem Stift, der an seinem freien Ende beispielsweise gequetscht ist, um ein Abrutschen des Trägers und der Schutzscheibe zu verhindern.

Aus der US 3 270 182 ist ein Heizelement bekannt.

Aus der DE 198 39 044 A1 ist eine derartige Einrichtung mit einem Heizelement bekannt, bei dem die Heizdrähte spiralförmig in Luftkanälen angeordnet sind. Bei anderen bekannten Heizelementen verlaufen die Heizdrähte in achsparallelen Luftkanälen.

Ein Problem stellt jedoch der Fall dar, dass das Heizelement trotz Unterschreitung des Minimalluftstroms betrieben wird, beispielsweise verursacht durch den Ausfall des Gebläses oder durch Verengung des Luftdurchtritts oder -austritts (Düsen). Eine Zerstörung des Heizelements ist hier in der Regel die Folge. Aus diesem Grund weisen die auf dem Markt erhältlichen Heißluftgeräte einen zusätzlichen Sensor, beispielsweise Thermoelemente, optische Sensoren, Widerstandsmessungen usw. auf, um diese unerwünschte Überhitzung zu verhindern.

Aus der CH 537 687 ist eine Vorrichtung an einem elektrischen Widerstandsheizgerät zur Begrenzung der Heizkörpertemperatur auf einen bestimmten Wert bekannt, bei der ein Rohrheizkörper einen Widerstandsdraht umfasst, der in ein zusammengepacktes, pulverförmiges Isoliermaterial eingebettet ist. Ein metallisches Mantelrohr umschließt das Isoliermaterial mit dem Draht, und die Enden des Mantelrohres sind durch isolierende Pfropfen dicht verschlossen. Bei Überschreiten einer bestimmten Maximaltemperatur wird der Ableitungsstrom zwischen dem Widerstandsdraht und dem Mantelrohr infolge der negativen Widerstandskennlinie des pulverförmigen Magnesiumoxids dazu verwendet, den Heizstromkreis zu unterbrechen.

Der vorliegenden Erfindung liegt die Aufgabe zugrunde, ein verbessertes Heizelement vorzuschlagen, bei dem ein effektiver Heizelementschutz ohne zusätzlichen Sensoren, beispielsweise Thermoelemente, optische Sensoren, Widerstandsmessungen usw., erreicht und zusätzlich die Möglichkeit der Temperaturregelung erweitert wird.

Diese Aufgabe wird erfindungsgemäß durch ein Heizelement mit den Merkmalen des Anspruchs 1 gelöst. Weitere vorteilhafte Ausgestaltungen sind den Unteransprüchen zu entnehmen.

Gemäß der Erfindung kontaktiert der Träger teilweise, vorzugsweise vollständig elektrisch die metallische Halterung. Diese ist mit einer elektrischen Schaltung verbunden, um mittels eines von der Erwärmung des Trägers abhängigen, zwischen dem in den Luftkanälen einliegenden spiralförmigen Heizdraht und der metallischen Halterung über das temperaturbeständige isolierende Material fließenden Stromes, den Heizstromkreis zu steuern und/oder zu regeln. Die elektrische Schaltung kann den Heizstromkreis bei Überschreiten einer bestimmten Messgröße abschalten und/oder die Leistung reduzieren. Als Messgröße kann entweder der infolge der Erwärmung über das isolierende keramische Material fließende Ableitstrom oder der mit Hilfe eines aufgeprägten Stromes durch das keramische Material ermittelte Isolationswiderstand herangezogen werden. Grundsätzlich ist es aus der CH-Schrift bekannt, dass bei ansteigender Temperatur der durch das temperaturbeständige Material fließende Strom erfasst und zur Temperatursteuerung benutzt werden kann. Dort ist der Heizdraht in dem isolierenden Material eingebettet, so dass eine direkte Kontaktierung zwischen Heizdraht und Isoliermaterial gegeben ist. Überraschenderweise wurde festgestellt, dass dieses Prinzip auch in bestehenden Heißlufteinrichtungen, bei denen die Heizdrähte in einem Luftstrom angeordnet sind, d.h. nicht in dem Material eingebettet sind, auch zu reproduzierbaren Messergebnissen führt, um den Heizstromkreis zu steuern und/oder zu regeln. Der Träger wird dabei entweder am Außenumfang oder mittels einer oder mehrerer Längsbohrungen kontaktiert. Hierzu ist es wichtig, dass ein ausreichender und guter Kontakt zwischen der metallischen Halterung und dem Trägermaterial erreicht wird. Die Kontaktfläche kann dabei entweder die ganze Oberfläche oder nur ein Teil der kontaktierbaren Fläche in unterschiedlichen Temperaturzonen des Trägers sein. Dies hängt davon ab, welche maximale Stromstärke für die weitere Signalverarbeitung - Steuerung/Regelung der Temperatur - erforderlich und gewünscht wird. Je kleiner die Übergangswiderstände von den Heizdrähten bis zu der kontaktierbaren Fläche sind, desto stärker kann sich der Strom aufbauen. Für die Ermittlung dieses Stromes sind der Übergangswiderstand von den Heizdrähten auf den keramischen Träger, der Innenwiderstand des Trägers und der Übergangswiderstand von dem Träger auf das Kontaktelement relevant. Bei höheren Temperaturen erfolgt eine Ionisation der Luft in dem jeweiligen Luftkanal. Hierdurch kann ein zusätzlicher Strom zwischen Heizdraht und Träger fließen, der den gesamten Strom durch das keramische Material beeinflusst. Dieser Strom durch das keramische Isolationsmaterial, bestimmt durch den temperaturabhängigen Isolationswiderstand und die angelegte Spannung zwischen Heizdraht und metallischer Halterung, soll im folgenden per Definition als Messstrom bezeichnet werden.

Gemäß einer bevorzugten Ausbildung wird über eine ohnehin vorhandene Halterung, insbesondere zentrale Halterung, der Messstrom abgeleitet. Dies kann beispielsweise dadurch erfolgen, dass als Halterung ein Hohlrohr, vorzugsweise Mehrkantrohr, verwendet wird, das nach Aufsetzen des Trägers von innen aufgeweitet wird, um sich an die immer bestehenden Toleranzen des temperaturbeständigen Materials anzupassen und dieses in ausreichendem Maße zu kontaktieren. Die Aufweitung von innen kann dabei mechanisch, pneumatisch oder hydraulisch erfolgen. Eine andere Möglichkeit besteht darin, runde oder eckige Federhülsen zu verwenden, die auf einen Metallstab aufgesetzt sind und damit einen ausreichenden Kontakt zwischen der Halterung und dem temperaturbeständigen Material zu realisieren. Die Halterung in Form eines Metallstiftes oder des Hohlrohrs kann auch durch Vergießen mittels eines kontaktierenden Materials, beispielsweise Flüssigkeramik, in dem Zwischenraum zwischen dem Umfang der zentralen Halterung und dem Kanal in dem Träger erfolgen.

Sofern es für die Kontaktierung der zentralen Halterung mit dem Träger nicht unbedingt erforderlich ist, kann entweder ein hohler Stift oder ein massiver Stift verwendet werden. Gemäß einer bevorzugten Ausführungsform wird ein Hohlstift verwendet und durch diesen der Temperaturfühler an die Spitze des Trägers hindurch geführt. Damit kann auf einfache und kostengünstige Art und Weise zusätzlich die erforderliche Temperaturerfassung für die Regelung der Heizdrähte an dem Luftaustrittspunkt aus dem Träger eingebracht werden. Vorteilhafterweise kontaktiert der Temperaturfühler mit seinem Mantel den Träger bzw. das Hohlrohr und leitet den Messstrom darüber ab.

Gemäß einer besonders bevorzugten Ausbildung weist der Träger als Kontaktfläche mindestens eine elektrisch leitfähige Oberfläche auf. Hierzu ist der Träger mit einem Leitermaterial wie beispielsweise Silber oder einem anderen die bei einem Heißlufteinrichtungen auftretenden Temperaturen aushaltenden Material beschichtet. Die beschichtete Fläche kann dabei am Außenumfang oder im Inneren einer Bohrung, in die ein Kontaktelement (Rohr oder Temperaturfühler) eingeführt wird, angeordnet sein und, wie vorstehend bereits erläutert, so bemessen und am Träger angeordnet sein, dass der Messstrom gewisse Grenzen nicht übersteigt. Die Verwendung einer elektrisch leitfähigen Fläche bewirkt, dass der Messstrom nicht mehr punktuell erfasst wird und damit starken Schwankungen unterliegt, sondern dass das Integral über alle auf die leitfähige Fläche treffenden Ströme erfasst und abgeleitet wird.

Nachfolgend wird die Erfindung anhand von Ausführungsbeispielen in Verbindung mit den begleitenden Zeichnungen näher erläutert. Es stellen dar:
- Figur 1: Darstellung eines Heißluftgerätes;
- Figur 2: eine schematische Schnittdarstellung durch das Heizrohr/Heizelement des Heißluftgerätes gemäß Figur 1;
- Figur 3: die Stirnansicht (a) auf einen Träger des Heizelements im Heizrohr;
- Figur 4: der prinzipielle Anschluss der Einrichtung zur Unterbrechung des Heizstromkreises; und
- Figur 5: eine Möglichkeit der Kontaktierung des Trägers mit einem Schnitt durch den Träger und eine vergrößerte Draufsicht auf das freie Ende des Trägers, wobei jedoch nur die wesentlichen Teile an denen eine Kontaktierung stattfindet dargestellt sind,
- Figur 6: eine andere Möglichkeit in der entsprechenden Darstellung wie in Figur 5; und
- Figur 7: eine weitere Möglichkeit in der entsprechenden Darstellung wie in den Figuren 5 und 6.

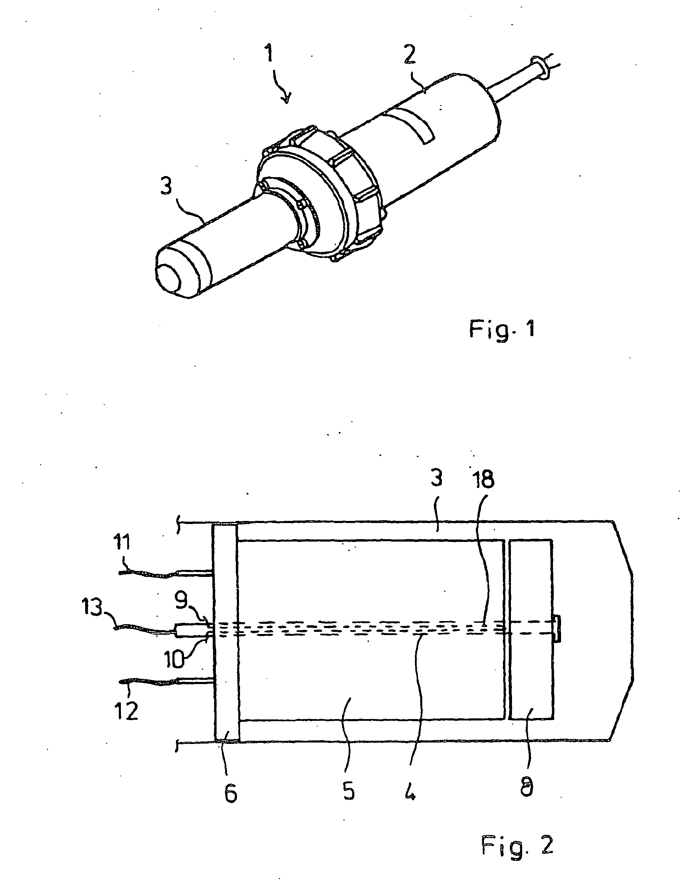

Figur 1 zeigt ein Heißluftgerät 1 mit einem Gehäuse 2 zur Aufnahme eines Gebläses und der Regelelemente. Bei dem dargestellten Heißluftgerät handelt es sich um eine Version, bei der in dem Gehäuse 2 das Gebläse angeordnet ist. In anderen bekannten Ausführungsformen erfolgt die Luftstromerzeugung extern, so dass in das Gehäuse beispielsweise ein zweiter Schlauch zur Zuführung des Luftstromes mündet. Die Erfindung ist unabhängig von der Art der Luftstromerzeugung. An das Gehäuse 2 schließt sich das Heizrohr 3 an.

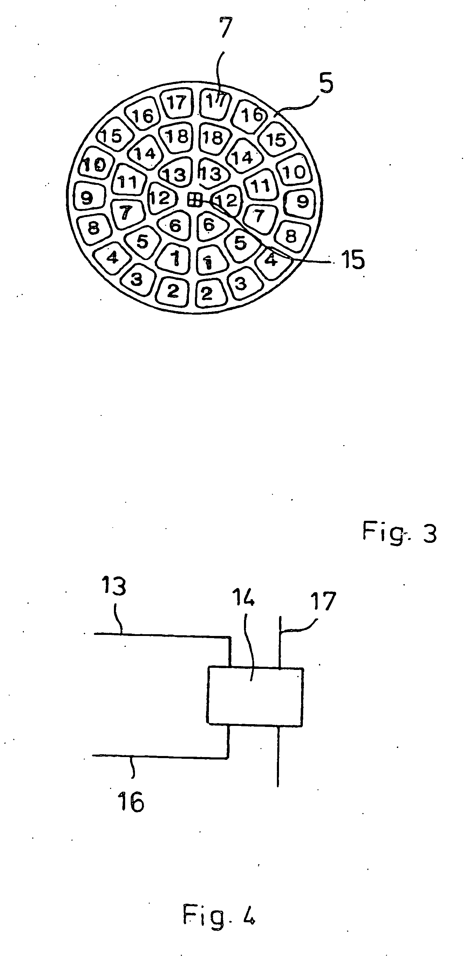

In der Figur 2 ist eine vergrößerte schematische Darstellung des Heizrohres 3 gezeigt, in dem mittels einer stiftförmigen Halterung 4 ein Keramikträger 5 über eine scheibenförmige Halterung 6 fixiert ist. Der Keramikträger 5 weist in dieser Figur nicht sichtbare, beispielsweise parallele Luftkanäle 7 (Figur 3) auf, in denen in bekannter Art und Weise Heizdrähte eingelegt sind. In Figur 3 sind die Anschlussmuster beispielhaft dargestellt. Die Heizdrähte selbst sind nicht gezeigt.

Gemäß Figur 2 folgt dem Keramikträger 5 noch eine bekannte Schutzscheibe 8, die zusammen mit dem Keramikträger 5 mittels des Stiftes 4 an der scheibenförmigen Halterung fixiert sind. In dem Ausführungsbeispiel in Figur 2 ist der Stift 4 als Hohlstift ausgebildet, so dass in seinem Inneren noch ein Temperaturfühler, beispielsweise Thermoelement, mit den Temperaturfühlerdrähten 9 und 10 angeordnet werden kann. Die scheibenförmige Halterung 6 weist elektrische Anschlüsse 11 und 12 für die Heizleiter in den Luftkanälen 7 des Keramikträgers 5 auf. Die stiftförmige Halterung 4 ist ebenfalls mit einem Anschluss 13 versehen, um den über den Keramikträger 5 fließenden Messstrom bei unzulässiger Erhitzung einer Einrichtung 14 (Figur 4) zur Trennung des Heizstromkreises zuzuführen.

Figur 3 zeigt die Luftkanäle 7 in dem Keramikträger 5 sowie eine in diesem Fall rechteckige zentrale Längsbohrung 15 zur Aufnahme einer stiftförmigen Halterung 4. Um einen ausreichenden Messstrom zu erhalten, ist es wichtig, dass die Halterung 4 einen möglichst guten Kontakt mit dem Keramikträger 5 erhält, um den Übergangswiderstand so gering wie möglich zu halten.

Aus Figur 4 wird der prinzipielle Anschluss eines elektrischen Schaltkreises 14 und die Unterbrechung des Heizstromkreises ersichtlich. Das schematische Blockschaltbild symbolisiert die verschiedenen vorstehend erwähnten elektrischen Schaltungsmöglichkeiten. Der elektrische Schaltkreis 14 kann beispielsweise je nach Anwendungsfall einen mechanischen oder elektronischen Schalter zur Trennung des Heizstromkreises aufweisen. Des Weiteren kann der Schaltkreis 14 eine Schaltung zur Messung und Auswertung des Isolationswiderstandes enthalten. Außerdem kann in dem Schaltkreis eine Schaltung zur Regelung der Temperatur des Heizelements in Abhängigkeit von dem Ableitstrom oder dem Isolationswiderstand untergebracht sein. Mit 13 ist beispielhaft die Leitung zu der metallischen Halterung 4 und mit 16 ein Referenzpotential gekennzeichnet.

Die Schaltung 14 weist in dem einen Ausführungsbeispiel ein Relais auf, das zwischen der Halterung 4 (über die Leitung 13) und dem Nullleiter 16 angeschlossen ist. Mit dem Relais wird bei Erreichen der Grenzwerte des Messstromes der Heizstromkreis, der mit der Ziffer 17 symbolisiert wird, getrennt. Erst nach einem vollständigen Ausschalten der Heißluftgeräte-Netzversorgung kann ein erneuter Heizvorgang eingeleitet werden.

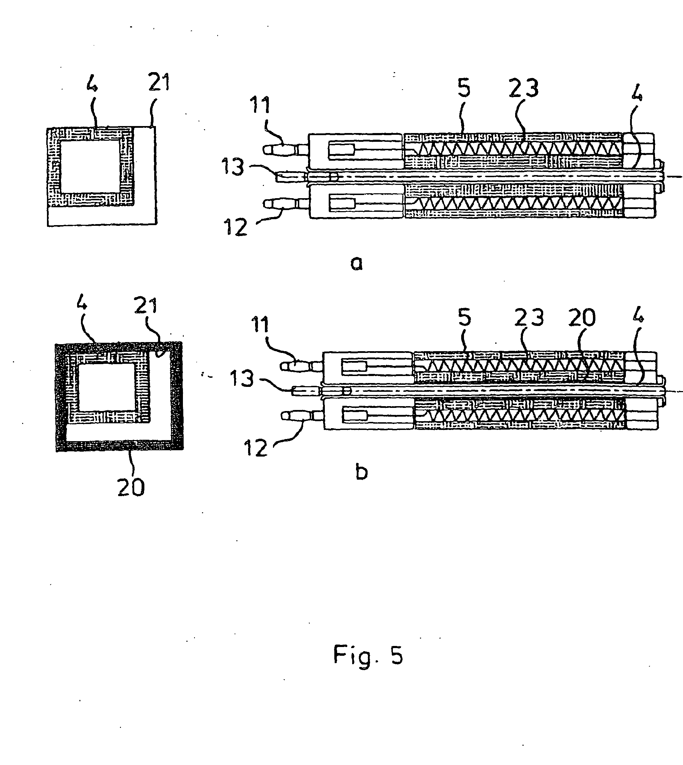

In Figur 5a ist ein Träger 5 mit einer zentralen Bohrung 21 dargestellt, bei dem die zentrale Halterung als Vierkantrohr ausgebildet ist. In dem Ausführungsbeispiel kontaktiert das Vierkantrohr 4 an zwei Seiten punktuell den Träger 5 in der zentralen Bohrung 21. Über die Anschlüsse 11 und 12 wird der Heizdraht 23 mit Energie versorgt und über den Anschluss 13 der Messstrom abgeführt. Figur 5b zeigt eine ähnliche Anordnung wie in Figur 5a, jedoch ist die Innenwand der zentralen Bohrung 21 mit einer elektrisch leitfähigen Schicht 20, beispielsweise Silber, beschichtet. Damit wird an den Kontaktstellen des Vierkantrohres 4 mit der leitfähigen Oberfläche 20 der gesamte auftretende Messstrom abgeführt, während in der Variante in Figur 5a nur der punktuell an den jeweiligen Kontaktstellen abgegriffene Strom abgeleitet wird.

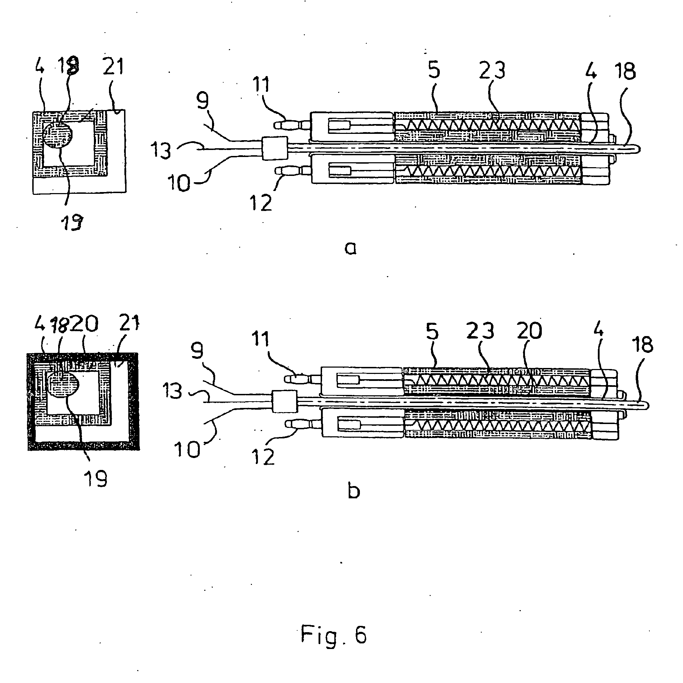

In der Variante gemäß Figur 6a wird, ähnlich wie in Figur 5a ein Vierkantrohr als Halterung 4 in der zentralen Bohrung 21 angeordnet. Zusätzlich befindet sich in dem Vierkantrohr 4 ein Temperaturfühler 18, der mit seinem Mantel 19 das Vierkantrohr 4 kontaktiert. Hier wird der Messstrom über die Leitung 13 abgeführt, während die Temperaturfühlerdrähte 9, 10 zur Erkennung der Temperatur benutzt werden. Entsprechend ist in Figur 6b wieder die Innenwand der zentralen Bohrung 21 mit einer leitfähigen Oberfläche 20 versehen, um nicht nur punktuelle Ströme zu erfassen.

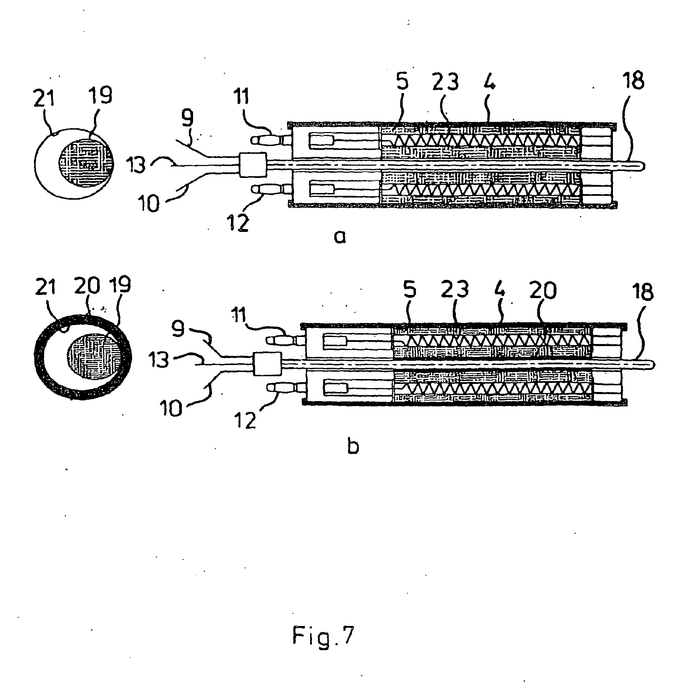

Figur 7a zeigt eine äußere Heizelementhalterung 4, die am Umfang des Trägers 5 angeordnet ist. Im Inneren einer zentralen Bohrung 21 befindet sich der Temperaturfühler 18 der diese an der Wand kontaktiert. Figur 7b zeigt die ähnliche Ausbildung jedoch mit einer zusätzlichen Beschichtung 20 der zentralen Bohrung 21, die von dem Mantel 19 des Temperaturfühlers 18 kontaktiert wird. Die Anschlüsse erfolgen entsprechend wie in den Figuren 6a und 6b dargestellt.

## Patentansprüche

1. Heizelement zur Anordnung im Luftstrom einer Heißlufteinrichtung mit einem Träger (5) aus temperaturbeständigem keramischen Isolationsmaterial, der in Luftkanälen (7) angeordnete Heizdrähte (23) aufweist, sowie mit mindestens einer metallischen Halterung (4) für den Träger zur Fixierung des Trägers in dem Heizelement, **dadurch gekennzeichnet, dass** die metallische Halterung (4) den Träger (5) wenigstens teilweise elektrisch kontaktiert und über mindestens einen Anschluss (13) mit einer elektrischen Schaltung (14) der Heißlufteinrichtung verbindbar ist, wodurch mittels eines von der Erwärmung des Trägers (5) abhängigen, zwischen dem in den Luftkanälen (7) einliegenden spiralförmigen Heizdraht (23), der das isolierende Material nur abschnittsweise elektrisch kontaktiert und nicht in dem Isolationswiderstand eingebettet ist, und der metallischen Halterung (4) über das temperaturbeständige isolierende Material fließenden Stromes, der durch den temperaturabhängigen Isolationswiderstand bestimmt wird, der Heizstromkreis (17) steuer- und/oder regelbar ist.

2. Heizelement nach Anspruch 1, **dadurch gekennzeichnet, dass** die Halterung (4) hohlrohrförmig ausgebildet ist, in der ein Temperaturfühler (18) einliegt, der mit seinem Mantel (19) die metallische Halterung (4) wenigstens teilweise elektrisch kontaktiert.

3. Heizelement nach Anspruch 1 oder 2, **dadurch gekennzeichnet, dass** die Halterung (4) in einer zentralen Längsbohrung (15) angeordnet ist.

4. Heizelement nach Anspruch 1, **dadurch gekennzeichnet, dass** in einer Längsbohrung (21) ein Temperaturfühler (18) einliegt, der mit seinem Mantel (19) den Träger (5) wenigstens teilweise kontaktiert, und am Außenumfang eine hohlzylindrische metallische Halterung (4) angeordnet ist.

5. Heizelement nach einem der vorangegangenen Ansprüche, **dadurch gekennzeichnet, dass** der Träger (5) als Kontaktfläche zwischen Träger (5) und metallischer Halterung (4) mindestens eine elektrisch leitfähige Oberfläche (20) aufweist.

## Claims

1. Heating element for deposition in an air stream of an hot-air device, with a carrier (5) formed from a temperature-resistant ceramic insulation material, which comprises heating wires (23) disposed in air channels (7) and at least one metallic mount (4) for the carrier to secure the carrier in the heating element, **characterized in that** the metallic mount (4) is in contact with the carrier (5) at least partially and can be connected to an electric circuit (14) of the hot-air device via a junction, in order to control and/or to regulate the heating current circuit (17) by means of a current, which is dependent on the heating of the carrier (5), flows over the temperature-resistant insulating material between the helical heating wire (23), lying in the air channels (7), and the metallic mount (4), and is determined by the temperature-dependent insulation resistance, which wire is only in electrical contact with the insulating material in sections and is not embedded in the insulating material.

2. A hot-air device according to claim 1, **characterized in that** the mount (4) is designed as a hollow tube, which incorporates a temperature sensor (18) whose jacket (19) comes into at least partial electrical contact with the metal mount (4).

3. A hot-air device according to claim 1 or 2, **characterized in that** the mount (4) is situated in a central longitudinal borehole (15).

4. A hot-air device according to claim 1, **characterized in that** a longitudinal borehole (21) incorporates a temperature sensor (18) whose jacket (19) comes into at least partial contact with the carrier (5), and a hollow cylindrical metal mount (4) is arranged on the outer periphery.

5. A hot-air device according to one of the preceding claims, **characterized in that** the carrier (5) exhibits at least one electrically conductive surface (20) as a contact surface between the carrier (5) and metal mount (4).

## Revendications

1. Elément chauffant destiné à être disposé dans le courant d'air d'un dispositif à air chaud, avec un support (5) en matériau isolant céramique résistant à la température, qui présente des fils chauffants (23) disposés dans des conduits d'air (7), ainsi qu'avec au moins une fixation métallique (4) pour le support, permettant de fixer le support dans l'élément chauffant, **caractérisé en ce que** la fixation métallique (4) contacte électriquement, au moins partiellement, le support (5) et peut être reliée à un circuit électrique (14) du dispositif à air chaud par au moins une connexion (13), de sorte que le circuit de chauffage (17) peut être commandé et/ou régulé au moyen d'un courant dépendant de l'échauffement du support (5), qui circule entre le fil chauffant (23) logé en spirale dans les conduits d'air (7), lequel ne contacte électriquement le matériau isolant que par sections et n'est pas inclus dans le matériau isolant, et la fixation métallique (4) via le matériau isolant résistant à la température et qui est déterminé par la résistance d'isolement variable avec la température.

2. Elément chauffant selon la revendication 1, **caractérisé en ce que** la fixation (4) est réalisée sous la forme d'un tube creux dans lequel est logée une sonde de température (18) qui contacte électriquement, au moins partiellement, la fixation métallique (4) par son enveloppe (19).

3. Elément chauffant selon la revendication 1 ou 2, **caractérisé en ce que** la fixation (4) est disposée dans un alésage longitudinal central (15).

4. Elément chauffant selon la revendication 1, **caractérisé en ce qu'**une sonde de température (18) qui contacte au moins partiellement le support (5) par son enveloppe (19) est logée dans un alésage longitudinal (21) et qu'une fixation métallique (4) cylindrique creuse est disposée sur le pourtour extérieur.

5. Elément chauffant selon une des revendications précédentes, **caractérisé en ce que** le support (5) présente au moins une surface électroconductrice (20) comme surface de contact entre le support (5) et la fixation métallique (4).
